# EUROPEAN PATENT APPLICATION

(11) **EP 2 111 023 A1**
(43) Date of publication of application: **21.10.2009**
(21) Application number: 09003365.5
(22) Date of filing: 09.03.2009
(51) Int. Cl.: H04M 1/2745, H04Q 3/66

(54) **Method for realising a communication between a first mobile phone and a second telephone**

(30) Priority: 10.03.2008 BE 200800145
(71) Applicant: E.C. Guldemond Beheer B.V., Besloten Vennootschap, 5262GD Vught (NL)
(72) Inventor: van den Breekel, Alphonsus Hubertus Arnoldus, 4871 BG Etten-Leur (NL)
(74) Representative: Donné, Eddy

(57) **Abstract**

Method for establishing a communication between a first mobile telephone (1) of a user and a second telephone (4), whereby this method comprises as steps that a mobile operator connects the mobile telephone (1) to a telephone platform (7) and subsequently puts the mobile telephone (1) through to the second telephone (4) by means of the above-mentioned telephone platform (7), characterised in that the method additionally comprises the step of realising a connection between the first mobile telephone (1) and the telephone platform (7) via a dial-in number which is linked to the area in which the user is situated.

## Description

The present invention concerns a method for establishing a connection between a first mobile telephone and a second telephone.

It is known that international calls with a mobile telephone, such as for example a GSM, realised through a connection which is established via a mobile telephone operator, are not cheap.

Different methods for making international calls cheaper are already known.

Thus, use can be made for example of internet telephone services, also called VOIP or IP telephone services, to make international calls.

Methods making use of telephone cards are also known, whereby the user must enter a dial-up number mentioned on the card, after which the mobile telephone of the user is connected to a telephone platform.

Next, the user must either or not enter a PIN-code, followed by the telephone number of the addressee, after which the connection between the telephone platform and the addressee is not realised via the mobile operator but via a cheaper VOIP service.

A disadvantage is that such a method is rather time-consuming since, apart from the telephone number of the addressee, the user must also enter a dial-in number and/or PIN code before being put through to the required telephone number.

Another disadvantage of this method is that, in case of loss or theft of such a pre-paid telephone card, the user cannot use the remaining credit balance.

Another disadvantage is that the user must always carry the telephone card with him in order to be able to make a call.

Yet another disadvantage is that the telephone cards usually have a maturity date at which the credit balance becomes unusable.

The invention aims to remedy one or several of the above-mentioned and other disadvantages by providing a method for establishing a communication between a first mobile telephone of a user and a second telephone, whereby this method comprises as steps that a mobile operator connects the mobile telephone to a telephone platform and subsequently puts the mobile telephone through to the second telephone by means of the above-mentioned telephone platform, whereby the method additionally comprises the step of realising a connection between the first mobile telephone and the telephone platform via a dial-in number which is linked to the area in which the user is situated.

An advantage is that the user does not need a telephone card and must not enter a PIN code or any other data before being able to make a call.

Another advantage consists in that the user does not need a computer and is merely connected by means of his mobile telephone to another telephone, which makes this method very simple and user-friendly.

An additional advantage is that the user has the possibility to manually select a dial-in number.

Another additional advantage is that making international calls will be much cheaper, since only the connection between the mobile telephone and the telephone platform is realised via the mobile operator.

Yet another additional advantage is that no special SIM card is required for the connection to the telephone platform via the mobile operator, and that any user of a mobile telephone, irrespective of the selected tariff scheme (post-paid or pre-paid) can use the telephone platform.

The user of the mobile telephone is preferably a registered user.

An advantage is that the user may have a certain phone credit on the telephone platform.

In a preferred embodiment of the invention, the telephone platform is automatically selected by the mobile telephone.

An advantage is that the user of the mobile telephone always calls at the lowest rate, irrespective of the area in which the user is situated.

In order to better explain the characteristics of the invention, the following method according to the invention for establishing a communication between a first mobile telephone and a second telephone is described by way of example only, without being limitative in any way, with reference to the sole accompanying figure.

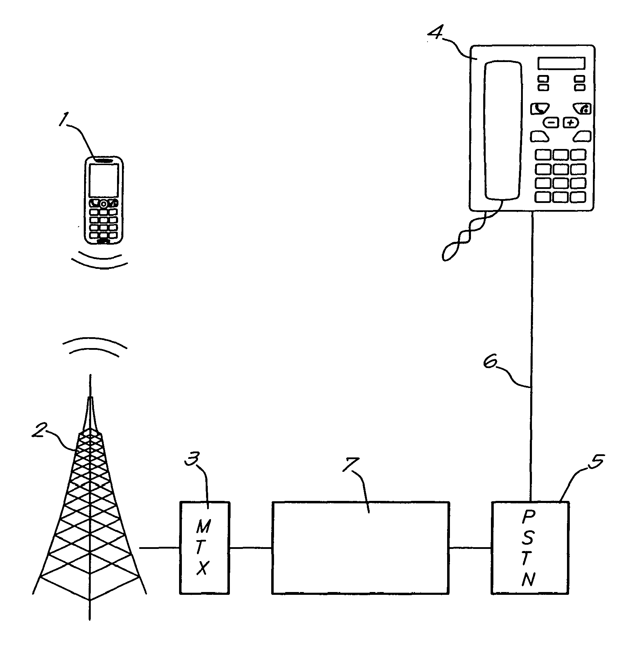

This figure schematically represents a first mobile telephone 1 of a user, such as for example a GSM, whereby the mobile telephone 1 is connected to a wireless network in the conventional way, as is schematically represented in the figure by means of a pylon 2 and a platform 3 for the mobile telephone network (an MTX exchange).

The user of the first mobile telephone 1 establishes a connection with a second telephone 4, as is schematically represented in the figure by means of the exchange 5 of a public telephone network (a PSTN exchange) which is in this case connected via a PSTN line 6 to the second telephone 4.

Although the figure shows that the second telephone 4 is a fixed telephone, it is not excluded according to the invention that this second telephone 4 is a mobile telephone, such as for example a GSM, a GPRS, a UMTS appliance or the like and/or that the connection with the second telephone is established via an ISDN network.

According to a characteristic of the invention, the connection between the first mobile telephone 1 and the second telephone 4 is established via a telephone platform 7.

Such a telephone platform 7 or such a telephone exchange makes sure that an incoming call is put through to a telephone 4 selected by the user.

According to a preferred characteristic of the invention, one or several telephone platforms 7 can be provided per country or per area.

The method for establishing a connection between a first mobile telephone 1 of a user with a second telephone 4 comprises a first step whereby the mobile telephone 1 is connected to the mobile platform 3 via a mobile operator and is automatically put through to a telephone platform 7.

According to the invention, the selection of the telephone platform 7 and the associated dial-in number depends on the area in which the user of the mobile telephone 1 is situated at the time the connection is established, and it also depends on the presence of a SIM card in the mobile telephone.

The area may be for example a country, but the invention is not restricted thereto.

According to a special characteristic of the invention, the user of the mobile telephone 1 manually selects a dial-in number which can establish a connection with a predetermined telephone platform 7.

According to another preferred embodiment of the invention, the telephone platform 7 is automatically selected by the mobile telephone 1.

According to a preferred characteristic of the invention, the mobile telephone 1 is provided with software which makes sure that, when the user enters a telephone number, the mobile telephone 1 is automatically connected to a telephone platform 7, either or not depending on the area where the user is situated.

This software is preferably pre-programmed in the memory of the mobile telephone 1.

In a preferred embodiment, this software may be a JAVA application, but of course it is not excluded to program said software in another appropriate language.

The software in the mobile telephone 1 will preferably select a telephone platform 7 on the basis of a national code, transmitted to the mobile telephone 1 by the mobile operator.

According to a preferred characteristic of the invention, the software in the mobile telephone 1 will transmit the number of the second telephone 4 as soon as the connection with the telephone platform 7 is established.

According to a characteristic of the invention, the mobile telephone 1 is then connected to the second telephone 4 by means of the telephone platform 7.

The connection between the telephone platform 7 and the second telephone 4 can be realised in different ways, for example via a fixed analogous or a digital telephone line or via a VOIP service.

This connection between the telephone platform 7 and the second telephone 4 is established without any intervention of the mobile operator of the mobile telephone 1, thus making it possible for the user of the mobile telephone 1 to make international calls in a cheaper way.

According to a preferred characteristic of the invention, the method can only be applied to registered users, whereby these users either or not have a phone credit at their disposal.

In a special embodiment, only one telephone platform 7 can be provided which can be reached via different dial-in numbers, depending on the area.

This allows for a simple management of the phone credit.

The present invention is by no means limited to mobile communication means 1, such as GSM, UMTS or GPRS appliances; on the contrary, a variant may also be appropriate for CDMA appliances.

Nor is it excluded according to the invention for the telephone platform 7 to establish a connection with one or several additional telephone platforms before putting the first mobile telephone 1 through to the second telephone 4.

The present invention is by no means restricted to the embodiment described by way of example and represented in the accompanying figure; on the contrary, such a communication method between a mobile telephone and another telephone can be realised according to different variants while still remaining within the scope of the invention.

## Claims

1. Method for establishing a communication between a first mobile telephone (1) of a user and a second telephone (4), whereby this method comprises as steps that a mobile operator connects the mobile telephone (1) to a telephone platform (7) and subsequently puts the mobile telephone (1) through to the second telephone (4) by means of the above-mentioned telephone platform (7), **characterised in that** the method additionally comprises the step of realising a connection between the first mobile telephone (1) and the telephone platform (7) via a dial-in number which is linked to the area in which the user is situated.

2. Method according to claim 1, **characterised in that** the telephone platform (7) is manually selected by the user of the mobile telephone (1).

3. Method according to claim 1, **characterised in that** the telephone platform (7) is automatically selected by the mobile telephone (1).

4. Method according to any one of the preceding claims, **characterised in that** the mobile telephone (1) is provided with software which automatically establishes the communication via the telephone platform (7).

5. Method according to claim 4, **characterised in that** the above-mentioned software is pre-programmed in the memory of the mobile telephone (1).

6. Method according to claim 4 or 5, **characterised in that** the above-mentioned software is a JAVA application.

7. Method according to any one of claims 4 to 6, **characterised in that** the software selects the telephone platform (7) on the basis of the national code which is transmitted to the mobile telephone (1) by the mobile operator.

8. Method according to any one of claims 4 to 7, **characterised in that** the software transmits the number of the second telephone (4) to the telephone platform (7).

9. Method according to any one of the preceding claims, **characterised in that** the method uses one or several telephone platforms (7) provided in one or several areas.

10. Method according to any one of the preceding claims, **characterised in that** the mobile telephone (1) is a GSM, a GPRS, a UMTS appliance or the like.

11. Method according to any one of the preceding claims, **characterised in that** the method can only be applied to registered users.
